# EUROPÄISCHE PATENTSCHRIFT

(11) **EP 2 860 407 B1**
(45) Veröffentlichungstag und Bekanntmachung des Hinweises auf die Patenterteilung: **18.01.2017**
(21) Anmeldenummer: 13187683.1
(22) Anmeldetag: 08.10.2013
(51) Int. Cl.: F16B 5/08, F16B 4/00, F16B 11/00, B23K 35/02

(54) **Strukturbauteil**
Structured component
Composant de structure

(43) Veröffentlichungstag der Anmeldung: 15.04.2015
(73) Patentinhaber: MAGNA STEYR Fahrzeugtechnik AG & Co KG, 8041 Graz (AT)
(72) Erfinder: Karner, Werner, 8055 Graz (AT); Mayr, Franz, 8323 St.Marein bei Graz (AT)
(74) Vertreter: Zangger, Bernd

(56) Entgegenhaltungen:
- DE-A1- 3 210 310
- DE-A1-102004 025 492
- DE-A1-102010 013 089
- DE-A1-102010 013 229
- DE-A1-102011 055 044
- DE-A1-102012 004 499
- US-A1- 2005 051 607

## Beschreibung

### Gebiet der Erfindung

Die vorliegende Erfindung betrifft einen Strukturbauteil umfassend einen ersten Bauteil und einen zweiten Bauteil. Der Strukturbauteil umfasst zumindest ein Verbindungsstück aus Metall, wobei das Verbindungsstück zumindest über die gesamte Dicke des ersten Bauteils den ersten Bauteil durchdringt und wobei das Verbindungsstück drehfest im ersten Bauteil festgelegt ist. Die Erfindung betrifft auch ein Verfahren zur Herstellung eines solchen Strukturbauteils.

### Stand der Technik

Strukturbauteile die aus mindestens zwei miteinander verbundenen Bauteilen aufgebaut sind, werden in verschiedensten Gebieten der Technik eingesetzt, beispielsweise als tragende Strukturbauteile in der Automobilindustrie. Üblicherweise werden zum Aufbau eines Strukturbauteils zwei oder mehr Metallteile miteinander verbunden. In jüngerer Zeit wird auch versucht Metallteile ganz oder teilweise durch leichtere Kunststoffteile oder Verbundteile zu ersetzen. In der Regel werden zum Aufbau eines Strukturbauteils Verbindungen zwischen Bauteilen durch Verschraubungen oder Nieten der Bauteile hergestellt.

Aus den Dokumenten DE 10 2004 025492 A1, DE 10 2012 004499 A1, DE 32 10 310 A1, DE 10 2010 013089 A1 und DE 10 2011 055044 A1 sind bereits Verbindungsstücke bekannt die einseitig mit einem weiteren Bauteil verschweißt werden.

### Zusammenfassung der Erfindung

Es ist eine Aufgabe der Erfindung, einen Strukturbauteil umfassend einen ersten Bauteil und einen zweiten Bauteil anzugeben, der einfach und prozesssicher hergestellt werden kann, und dabei eine tragfähige Verbindung der Bauteile aufweist. Insbesondere soll auch der Aufbau von tragenden Strukturbauteilen für die Automobilindustrie ermöglicht werden, beispielsweise aus verschiedenen Materialien. Es ist auch eine Aufgabe der Erfindung ein einfaches Verfahren zur Herstellung eines solchen Strukturbauteils anzugeben.

Die Lösung der Aufgabe erfolgt durch ein Strukturbauteil umfassend einen ersten Bauteil und einen zweiten Bauteil, wobei der erste Bauteil aus Kunststoff oder aus einem Faserverbundmaterial besteht, weiters umfassend zumindest ein Verbindungsstück aus Metall, wobei das Verbindungsstück zumindest über die gesamte Dicke des ersten Bauteils den ersten Bauteil durchdringt, wobei das Verbindungsstück an seinem dem zweiten Bauteil zugewandten Ende mit dem zweiten Bauteil verschweißt ist, wobei der zweite Bauteil aus Metall besteht, oder mit einem den zweiten Bauteil durchdringenden weiteren Verbindungsstück aus Metall verschweißt ist, wobei das Verbindungsstück im Herstellungsprozess des ersten Bauteils in diesen eingearbeitet wurde, wobei das Verbindungsstück drehfest im ersten Bauteil festgelegt ist.

Das metallische Verbindungsstück ist also erfindungsgemäß auf Seite des zweiten Bauteils nicht aufwändig mit einer Schraubenmutter oder einem anderen Abschlussteil befestigt und muss auch den zweite Bauteil nicht durchdringen, sondern ist direkt mit dem zweiten Bauteil, der beispielsweise eine Metallplatte oder ein Metallformteil sein kann, oder auch mit einem weiteren metallischen Verbindungsstück, das in den zweiten Bauteil eingebracht oder eingearbeitet sein kann, verschweißt. Die Verschweißung kann insbesondere an der dem ersten Bauteil zugewandten Oberfläche des zweiten Bauteils erfolgen. Das Verbindungsstück kann jedoch beispielsweise auch den zweiten Bauteil durchdringen und mit der dem ersten Bauteil abgewandten Oberfläche des zweiten Bauteils verschweißt sein.

Das Verbindungsstück wurde bereits im Herstellungsprozess des ersten Bauteils, insbesondere einer Kunststoff- oder Faserverbundplatte, in diese eingearbeitet. Dadurch kommt es zu keiner Schädigung von beispielsweise Fasern des ersten Bauteiles und zusätzlich zu einer Verstärkung durch die Verdichtung der Fasern rund um das Verbindungsstück.

Weiterbildungen der Erfindung sind in den abhängigen Ansprüchen, der Beschreibung sowie den beigefügten Zeichnungen angegeben.

Insbesondere ist das erste Bauteil eine Platte oder ein Formteil und/oder das zweite Bauteil eine Platte oder ein Formteil. Unter Platte oder Formteil sind nicht nur flache bzw. im Wesentlichen in einer Ebene verlaufende Teile zu verstehen, sondern auch Strukturbauteile bzw. formgestaltete Teile. Im Falle von Metall können dies beispielsweise Press-, Schmiede- und Zugteile oder Profilstangen oder Blechformen oder örtlich gequetschte Rohre oder Gussformen und ähnliches sein.

Das Verbindungsstück kann zylinderförmig, stiftförmig oder als Stift mit Kopf ausgebildet sein, ebenso gegebenenfalls das weitere Verbindungsstück. Formen ohne Kopf sind besonders geeignet für Verbindungen von drei Bauteilen, wo der erste Bauteil also einerseits mit einem zweiten Bauteil und am anderen Ende des Verbindungsstückes mit einem dritten Bauteil, oder beispielsweise einer Scheibe, verschweißt wird. Formen des Verbindungsstückes mit Kopf sind wiederum besonders geeignet für nur einseitige Verschweißung des Verbindungsstückes, wobei der Kopf an der gegenüberliegenden Seite des ersten Bauteils an diesem anliegen kann und den ersten Bauteil an diesem Ende gegen axiales Verschieben sichern kann.

Besonders bevorzugt ist das Verbindungsstück und/oder gegebenenfalls das weitere Verbindungsstück massiv ausgebildet, so dass insbesondere über das Verbindungsstück eine Kraft von mehr als 1000 N, insbesondere mehr als 2500 N übertragbar ist, um ein stabiles, tragendes Strukturbauteil zu bilden.

Der erste Bauteil besteht aus Kunststoff oder Faserverbund und ist insbesondere eine Kunststoffplatte oder eine Faserverbundplatte. Der zweite Bauteil ist bevorzugt eine Metallplatte, beispielsweise aus Stahl, insbesondere ein Metallblech.

Erfindungsgemäß kann so eine Verbindung zwischen verschiedenen Materialien, nämlich zwischen Kunststoff bzw. Faserverbund auf der einen Seite und Metall auf der anderen Seite hergestellt werden.

Das zweite Bauteil kann bevorzugt eine Metallscheibe oder ein Metallstreifen sein, wobei insbesondere der Metallstreifen als zweiter Bauteil für mehrere Verbindungsstücke dienen kann.

Wenn im zweiten Bauteil ein weiteres Verbindungsstück aus Metall verwendet wird, kann der zweite Bauteil auch aus Kunststoff oder Faserverbund bestehen und insbesondere eine Kunststoffplatte oder eine Faserverbundplatte sein.

Bevorzugt wird die Verschweißung durch Punktschweißung, Auftragsschweißung, Reibschweißen oder auch durch eine Verschweißung mit Hilfe einer reaktiven Folie hergestellt.

Bevorzugt ist das Verbindungsstück stoffschlüssig und/oder formschlüssig mit dem ersten Bauteil verbunden.

Gemäß einer Ausführungsform ist das erste Verbindungsstück zylinderförmig oder stiftförmig ausgeführt und an einem Ende mit dem zweiten Bauteil und am entgegengesetzten Ende mit einem dritten Bauteil, insbesondere an beiden Enden mit einem Metallblech, verschweißt. Auch das dritte Bauteil kann beispielsweise als Metallscheibe oder Metallstreifen ausgeführt sein.

Gemäß einer anderen Ausführungsform der Erfindung ist das erste Verbindungsstück als Stift mit Kopf ausgeführt und an dem Ende, an welchem das Verbindungsstück keinen Kopf aufweist, mit dem zweiten Bauteil, insbesondere einem Metallblech verschweißt.

In einem erfindungsgemäßen Strukturbauteil können auch zusätzlich zum ersten Bauteil ein oder mehrere Zusatz-Bauteile, insbesondere weitere Platten oder Formteile, am Verbindungsstück angeordnet sein, so dass das Verbindungsstück zumindest über die gesamte Dicke des ersten Bauteils und der Zusatz-Bauteile diese durchdringt. Das Verbindungsstück kann dann mit dem zweiten Bauteil und gegebenenfalls am anderen Ende auch mit einem dritten Bauteil verschweißt sein.

Ein erfindungsgemäßes Verfahren zur Herstellung eines Strukturbauteils umfasst die Schritte, dass das Verbindungsstück in den ersten Bauteil im Herstellungsprozess des ersten Bauteils in diesen eingearbeitet wird und danach das Verbindungsstück an seinem dem zweiten Bauteil zugewandten Ende mit dem zweiten Bauteil oder mit einem den zweiten Bauteil durchdringenden weiteren Verbindungsstück aus Metall verschweißt wird.

Besonders bevorzugt werden mehrere Verbindungsstücke in den ersten Bauteil im Herstellungsprozess des ersten Bauteils in diesen eingearbeitet und danach der zweite Bauteil zum ersten Bauteil positioniert und danach die Verbindungsstücke mit dem zweiten Bauteil und/oder mit den zweiten Bauteil durchdringenden weiteren Verbindungsstücken aus Metall verschweißt.

Bevorzugt wird die Verschweißung durch Punktschweißung, Auftragsschweißung, Reibschweißen oder durch eine Verschweißung mit einer reaktiven Folie hergestellt.

### Kurzbeschreibung der Zeichnungen

Die Erfindung wird im Folgenden beispielhaft unter Bezugnahme auf die Zeichnungen beschrieben.
- Fig. 1a: ist eine Schnittansicht von einem Strukturbauteil mit drei Verbindungsstücken von der Seite gemäß A-A der Fig. 1b.
- Fig. 1b: ist eine Draufsicht auf ein Strukturbauteil mit fünf Schweißpunkten.
- Fig. 2: ist eine Ansicht eines erfindungsgemäßen Strukturbauteils von der Seite.
- Fig. 3a: ist eine Ansicht eines weiteren erfindungsgemäßen Strukturbauteils von der Seite.
- Fig. 3b: ist eine Ansicht eines weiteren erfindungsgemäßen Strukturbauteils von der Seite.
- Fig. 4: ist eine Ansicht eines weiteren erfindungsgemäßen Strukturbauteils von der Seite.

### Detaillierte Beschreibung der Erfindung

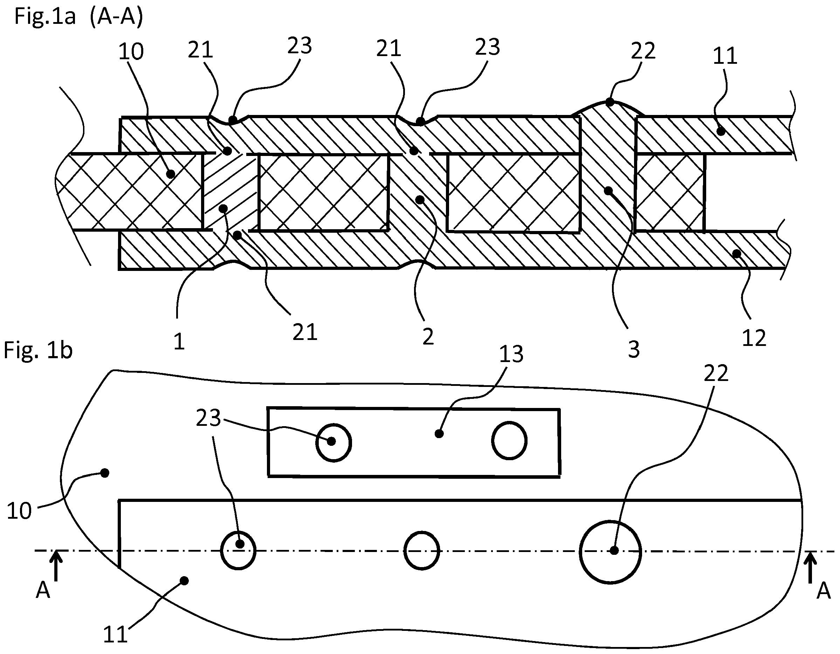

In den Fig. 1a und 1b ist ein Strukturbauteil mit einem ersten Bauteil 10 aus Kunststoff oder Faserverbund und einem zweiten Bauteil 11, gebildet durch ein Metallblech, dargestellt. Die Verbindung zwischen dem ersten und dem zweiten Bauteil 10, 11 erfolgt mittels zylinder- oder stiftförmigen Verbindungsstücken 1, 2, 3 aus Metall, wobei die Verbindungsstücke 1, 2, 3 über die gesamte Dicke des ersten Bauteils 10 den ersten Bauteil 10 durchdringen. Die Verbindungsstücke 1, 2, 3 sind beispielsweise durch Pressen, Kleben oder thermisches Fügen im ersten Bauteil 10 fixiert. Die Verbindungsstücke 1, 2, 3 sind an ihren dem zweiten Bauteil 11 zugewandten Ende mit dem zweiten Bauteil 11 in den Schweißzonen 21, 22 an der Oberfläche des zweiten Bauteils 11 durch Punktschweißen bzw. in 22 durch Auftragschweißen verschweißt. Beim Auftragschweißen kann Schweißmaterial überstehend zum zweiten Bauteil 11 aufgetragen werden und beispielsweise anschließend auf eine ebene Fläche hin bearbeitet werden. Beim Punktschweißen können an der außenliegenden Oberfläche des zweiten Bauteils Schweißpunkte 23 als Einkerbungen entstehen. Das erste Verbindungsstück 1 ist weiters an seinem dem zweiten Bauteil 11 abgewandten Ende mit einem dritten Bauteil 12, beispielsweise einer Platte oder einem Formteil, ebenfalls in einer Schweißzone 21, verschweißt. Die Verbindungsstücke 2 und 3 sind hingegen bereits vor der Verbindung der Bauteile miteinander am dritten Bauteil 12 fixiert oder einstückig mit diesem ausgeführt.

In Fig. 1b sind zusätzlich zwei weitere Schweißpunkte 23, mit darunterliegenden, hier nicht sichtbaren Verbindungsstücken 1 dargestellt, die mit einem eigenen Metallstreifen 13, als weiteres zweites Bauteil, verschweißt sind.

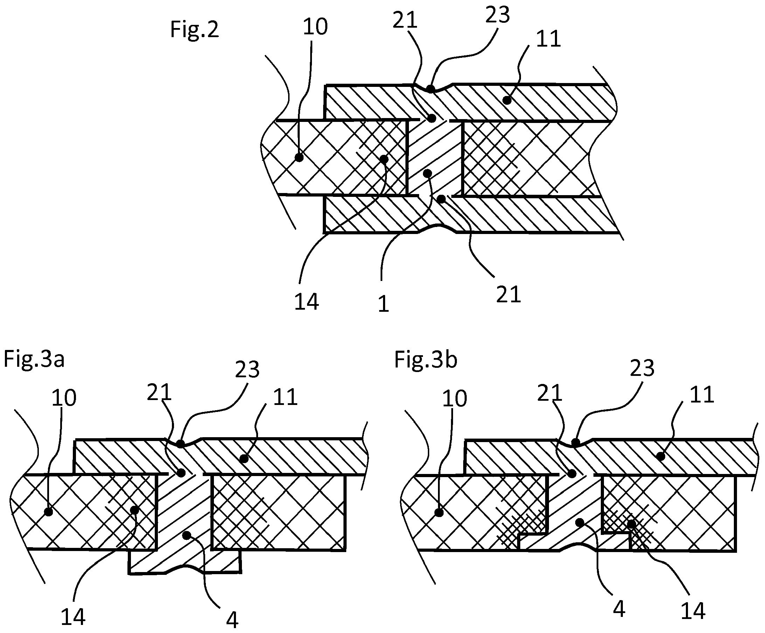

Die Fig. 2 entspricht weitgehend der links in Fig. 1a dargestellten Verbindungsvariante, wobei das Verbindungsstück 1 bereits im Herstellungsprozess der Kunststoff- oder Faserverbundplatte 10 in diese eingearbeitet wurde. Dadurch kommt es zu keiner Schädigung von beispielsweise Fasern des ersten Bauteiles 10 und zusätzlich zu einer Verstärkung durch die Verdichtung 14 der Fasern rund um das Verbindungsstück 1.

In der in Fig. 3a dargestellten Ausführungsform ist der erste Bauteil 10 lediglich einseitig mit einem zweiten Bauteil 11 verbunden. Das erste Verbindungsstück 4 ist als Stift mit einem Kopf ausgeführt und ist an dem Ende, an welchem das Verbindungsstück 4 keinen Kopf aufweist, in der Schweißzone 21, mit einem Metallblech als zweiter Bauteil 11 verschweißt. Der Kopf des Verbindungsstückes 4 sichert das erste Bauteil 10 vor axialem Verschieben entlang des Verbindungsstückes 4. Der Kopf des Verbindungsstückes 4 kann außen am ersten Bauteil 10 anliegen, wie in Fig. 3a dargestellt, oder auch flächenbündig, beispielsweise bereits bei der Herstellung des Bauteils 10, in den Bauteil 10 eingearbeitet sein, wie in Fig. 3b dargestellt.

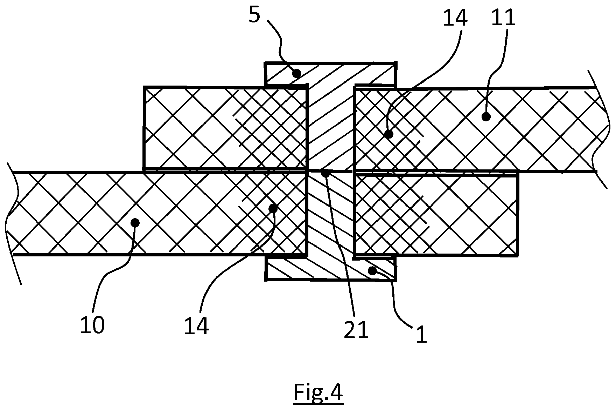

Bei der Ausführungsform gemäß Fig. 4 umfasst ein Strukturbauteil einen ersten Bauteil 10 und einen zweiten Bauteil 11. Der erste und zweite Bauteil 10, 11 sind über ein Verbindungsstück 1 aus Metall, dass den ersten Bauteil 10 durchdringt, und ein weiteres Verbindungsstück 5 aus Metall, dass den zweiten Bauteil 11 durchdringt miteinander verbunden. Das Verbindungsstück 1 ist an seinem dem zweiten Bauteil 11 zugewandten Ende mit dem den zweiten Bauteil 11 durchdringenden weiteren Verbindungsstück 5 verschweißt.

### Bezugszeichenliste

- 1, 2, 3, 4: Verbindungsstück
- 5: weiteres Verbindungsstück
- 10: erstes Bauteil
- 11: zweites Bauteil
- 12: drittes Bauteil
- 13: Metallstreifen
- 14: Verdichtung
- 21: Schweißzone
- 22: Schweißzone
- 23: Schweißpunkt

## Patentansprüche

1. Strukturbauteil umfassend einen ersten Bauteil (10) und einen zweiten Bauteil (11), wobei das erste Bauteil (10) aus Kunststoff oder aus einem Faserverbundmaterial besteht, weiters umfassend zumindest ein Verbindungsstück (1, 2, 3, 4) aus Metall, wobei das Verbindungsstück (1, 2, 3, 4) zumindest über die gesamte Dicke des ersten Bauteils (10) den ersten Bauteil (10) durchdringt, wobei das Verbindungsstück (1, 2, 3, 4) drehfest im ersten Bauteil (10) festgelegt ist, wobei das Verbindungsstück (1, 2, 3, 4) an seinem dem zweiten Bauteil (11) zugewandten Ende mit dem zweiten Bauteil (11) verschweißt ist, wobei der zweite Bauteil (11) aus Metall besteht, oder mit einem den zweiten Bauteil (11) durchdringenden weiteren Verbindungsstück (5) aus Metall verschweißt ist, **dadurch gekennzeichnet, dass** das Verbindungsstück (1,2, 3, 4) im Herstellungsprozess des ersten Bauteils (10) in diesen eingearbeitet wurde.

2. Strukturbauteil nach Anspruch 1,
**dadurch gekennzeichnet, dass** das erste Bauteil (10) eine Platte oder ein Formteil ist und/ oder das zweite Bauteil (11) eine Platte oder ein Formteil ist.

3. Strukturbauteil nach Anspruch 1 oder 2,
**dadurch gekennzeichnet, dass** das Verbindungsstück (1, 2, 3, 4) und/oder das weitere Verbindungsstück (5) zylinderförmig, stiftförmig oder als Stift mit Kopf ausgebildet ist.

4. Strukturbauteil nach zumindest einem der vorhergehenden Ansprüche,
**dadurch gekennzeichnet, dass** das Verbindungsstück (1, 2, 3, 4) und/oder das weitere Verbindungsstück (5) massiv ausgebildet ist, so dass über das Verbindungsstück (1,2, 3, 4) und/oder das weitere Verbindungsstück (5) mehr als 1000 N, insbesondere mehr als 2500 N übertragbar sind.

5. Strukturbauteil nach zumindest einem der vorhergehenden Ansprüche,
**dadurch gekennzeichnet, dass** das erste Bauteil (10) eine Kunststoffplatte oder eine Faserverbundplatte ist.

6. Strukturbauteil nach zumindest einem der vorhergehenden Ansprüche,
**dadurch gekennzeichnet, dass** das zweite Bauteil (11) eine Metallplatte, insbesondere ein Metallblech, ist.

7. Strukturbauteil nach zumindest einem der vorhergehenden Ansprüche,
**dadurch gekennzeichnet, dass** das zweite Bauteil (11) eine Metallscheibe oder ein Metallstreifen (13) ist, wobei insbesondere der Metallstreifen (13) als zweiter Bauteil (11) für mehrere Verbindungsstücke (1, 2, 3, 4) dient.

8. Strukturbauteil nach zumindest einem der vorhergehenden Ansprüche,
**dadurch gekennzeichnet, dass** die Verschweißung durch Punktschweißung, Auftragsschweißung, Reibschweißen oder durch eine Verschweißung mit einer reaktiven Folie hergestellt ist.

9. Strukturbauteil nach zumindest einem der vorhergehenden Ansprüche,
**dadurch gekennzeichnet, dass** das Verbindungsstück (1, 2, 3, 4) stoffschlüssig und/oder formschlüssig mit dem ersten Bauteil (10) verbunden ist.

10. Strukturbauteil nach zumindest einem der vorhergehenden Ansprüche,
**dadurch gekennzeichnet, dass** das Strukturbauteil einen dritten Bauteil (12) umfasst, wobei das Verbindungsstück (1, 2, 3, 4) zylinderförmig oder stiftförmig ausgeführt ist und an einem Ende mit dem zweiten Bauteil (11) und am entgegengesetzten Ende mit dem dritten Bauteil (12), insbesondere an beiden Enden mit einem Metallblech, verschweißt ist.

11. Strukturbauteil nach zumindest einem der Ansprüche 1 bis 9,
**dadurch gekennzeichnet, dass** das erste Verbindungsstück (1, 2, 3, 4) als Stift mit Kopf ausgeführt ist und an dem Ende, an welchem das Verbindungsstück (1, 2, 3, 4) keinen Kopf aufweist, mit dem zweiten Bauteil (11), insbesondere einem Metallblech, verschweißt ist.

12. Strukturbauteil nach zumindest einem der vorgehenden Ansprüche,
**dadurch gekennzeichnet, dass** zusätzlich zum ersten Bauteil (10) ein oder mehrere Zusatz-Bauteile, insbesondere weitere Platten oder Formteile, am Verbindungsstück (1,2, 3, 4) angeordnet sind, so dass das Verbindungsstück (1, 2, 3, 4) zumindest über die gesamte Dicke des ersten Bauteils (10) und der Zusatz-Bauteile diese durchdringt und mit dem zweiten Bauteil (11) verschweißt ist.

13. Verfahren zur Herstellung eines Strukturbauteils nach zumindest einem der Ansprüche 1 bis 12,
**dadurch gekennzeichnet, dass** das Verbindungsstück (1, 2, 3, 4) in den ersten Bauteil (10) im Herstellungsprozess des ersten Bauteils (10) in diesen eingearbeitet wird und danach das Verbindungsstück (1, 2, 3, 4) an seinem dem zweiten Bauteil (11) zugewandten Ende mit dem zweiten Bauteil (11) oder mit einem den zweiten Bauteil (11) durchdringenden weiteren Verbindungsstück aus Metall verschweißt wird.

14. Verfahren nach Anspruch 13,
**dadurch gekennzeichnet, dass** mehrere Verbindungsstücke (1, 2, 3, 4) in den ersten Bauteil (10) im Herstellungsprozess des ersten Bauteils in diesen eingearbeitet werden und danach der zweite Bauteil (11) zum ersten Bauteil (10) positioniert wird und danach die Verbindungsstücke (1, 2, 3, 4) mit dem zweiten Bauteil (11) und/ oder mit den zweiten Bauteil (11) durchdringenden weiteren Verbindungsstücken aus Metall verschweißt werden.

15. Verfahren nach Anspruch 13 oder 14,
**dadurch gekennzeichnet, dass** die Verschweißung durch Punktschweißung, Auftragsschweißung, Reibschweißen oder durch eine Verschweißung mit einer reaktiven Folie hergestellt wird.

## Claims

1. Stuctured component comprising a first component (10) and a second component (11), the first component (10) consisting of plastic or a fibre composite material, also comprising at least one connecting piece (1, 2, 3, 4) made of metal, the connecting piece (1, 2, 3, 4) penetrating the first component (10) at least over the entire thickness of the first component (10), the connecting piece (1, 2, 3, 4) being fixed in the first component (10) for rotation therewith, the connecting piece (1, 2, 3, 4) being welded at its end facing the second component (11) to the second component (11), the second component (11) consisting of metal, or being welded to a further connecting piece (5) made of metal which penetrates the second component (11), **characterized in that** the connecting piece (1, 2, 3, 4) has been incorporated in the first component (10) during the process of producing said component.

2. Stuctured component according to Claim 1, **characterized in that** the first component (10) is a panel or a shaped part and/or the second component (11) is a panel or a shaped part.

3. Stuctured component according to Claim 1 or 2, **characterized in that** the connecting piece (1, 2, 3, 4) and/or the further connecting piece (5) is formed as a cylinder, a pin or a pin with a head.

4. Stuctured component according to at least one of the preceding claims, **characterized in that** the connecting piece (1, 2, 3, 4) and/or the further connecting piece (5) is of a solid form, so that over 1000 N, in particular over 2500 N, can be transferred by way of the connecting piece (1, 2, 3, 4) and/or the further connecting piece (5).

5. Stuctured component according to at least one of the preceding claims, **characterized in that** the first component (10) is a plastic panel or a fibre composite panel.

6. Stuctured component according to at least one of the preceding claims, **characterized in that** the second component (11) is a metal plate, in particular a metal sheet.

7. Stuctured component according to at least one of the preceding claims, **characterized in that** the second component (11) is a metal disc or a metal strip (13), in particular the metal strip (13) serving as a second component (11) for a number of connecting pieces (1, 2, 3, 4).

8. Stuctured component according to at least one of the preceding claims, **characterized in that** the welding is produced by spot welding, build-up welding, friction welding or else by welding with the aid of a reactive film.

9. Stuctured component according to at least one of the preceding claims, **characterized in that** the connecting piece (1, 2, 3, 4) is connected to the first component (10) by a material bond and/or a form fit.

10. Stuctured component according to at least one of the preceding claims, **characterized in that** the structured component comprises a third component (12), the connecting piece (1, 2, 3, 4) being designed in the form of a cylinder or a pin and being welded at one end to the second component (11) and at the opposite end to the third component (12), in particular at both ends to a metal sheet.

11. Stuctured component according to at least one of Claims 1 to 9, **characterized in that** the first connecting piece (1, 2, 3, 4) is designed as a pin with a head and is welded at the end at which the connecting piece (1, 2, 3, 4) has no head to the second component (11), in particular a metal sheet.

12. Stuctured component according to at least one of the preceding claims, **characterized in that** in addition to the first component (10) there is/are one or more additional components, in particular further plates or shaped parts, arranged on the connecting piece (1, 2, 3, 4), so that the connecting piece (1, 2, 3, 4) penetrates the first component (10) and the additional components at least over the entire thickness thereof and is welded to the second component (11).

13. Method for producing a stuctured component according to at least one of Claims 1 to 12, **characterized in that** the connecting piece (1, 2, 3, 4) is introduced into the first component (10), in particular is incorporated in the first component (10) already during the process of producing said component or is inserted into a prepared clearance in the first component after the production process, and, after that, the connecting piece (1, 2, 3, 4) is welded at its end facing the second component (11) to the second component (11) or to a further connecting piece made of metal which penetrates the second component (11).

14. Method according to Claim 13, **characterized in that** a number of connecting pieces (1, 2, 3, 4) are incorporated in the first component (10) during the process of producing the first component and, after that, the second component (11) is positioned in relation to the first component (10) and, after that, the connecting pieces (1, 2, 3, 4) are welded to the second component (11) and/or to the further connecting pieces (1, 2, 3, 4) made of metal which penetrate the second component (11).

15. Method according to Claim 13 or 14, **characterized in that** the welding is produced by spot welding, build-up welding, friction welding or by welding with a reactive film.

## Revendications

1. Composant de structure comprenant un premier composant (10) et un deuxième composant (11), le premier composant (10) se composant d'un plastique ou d'un matériau composite renforcé par des fibres, comprenant en outre au moins une pièce de liaison (1, 2, 3, 4) en métal, la pièce de liaison (1, 2, 3, 4) traversant le premier composant (10) au moins sur toute l'épaisseur du premier composant (10), la pièce de liaison (1, 2, 3, 4) étant fixée de manière solidaire en rotation dans le premier composant (10), la pièce de liaison (1, 2, 3, 4) étant soudée au deuxième composant (11) au niveau de son extrémité tournée vers le deuxième composant (11), le deuxième composant (11) se composant de métal, ou étant soudé à une pièce de liaison (5) en métal supplémentaire traversant le deuxième composant (11), **caractérisé en ce que** la pièce de liaison (1, 2, 3, 4), au cours du processus de fabrication du premier composant (10), a été incorporée dans celui-ci.

2. Composant de structure selon la revendication 1, **caractérisé en ce que** le premier composant (10) est une plaque ou une pièce moulée et/ou le deuxième composant (11) est une plaque ou une pièce moulée.

3. Composant de structure selon la revendication 1 ou 2,
**caractérisé en ce que** la pièce de liaison (1, 2, 3, 4) et/ou la pièce de liaison supplémentaire (5) est/sont réalisée(s) sous forme cylindrique, sous forme de goupille ou sous forme de goupille à tête.

4. Composant de structure selon au moins l'une quelconque des revendications précédentes, **caractérisé en ce que** la pièce de liaison (1, 2, 3, 4) et/ou la pièce de liaison supplémentaire (5) est/sont réalisée(s) sous forme massive de telle sorte que plus de 1000 N, en particulier plus de 2500 N puissent être transmis par le biais de la pièce de liaison (1, 2, 3, 4) et/ou de la pièce de liaison supplémentaire (5).

5. Composant de structure selon au moins l'une quelconque des revendications précédentes, **caractérisé en ce que** le premier composant (10) est une plaque en plastique ou une plaque en matériau composite renforcé par des fibres.

6. Composant de structure selon au moins l'une quelconque des revendications précédentes, **caractérisé en ce que** le deuxième composant (11) est une plaque métallique, en particulier une tôle métallique.

7. Composant de structure selon au moins l'une quelconque des revendications précédentes, **caractérisé en ce que** le deuxième composant (11) est un disque métallique ou un ruban métallique (13), en particulier le ruban métallique (13) servant de deuxième composant (11) pour plusieurs pièces de liaison (1, 2, 3, 4).

8. Composant de structure selon au moins l'une quelconque des revendications précédentes, **caractérisé en ce que** le soudage est réalisé par soudage par points, soudage par rechargement, soudage par friction, ou par un soudage avec une feuille réactive.

9. Composant de structure selon au moins l'une quelconque des revendications précédentes, **caractérisé en ce que** la pièce de liaison (1, 2, 3, 4) est connectée au premier composant (10) par engagement par liaison de matière et/ou par correspondance de formes.

10. Composant de structure selon au moins l'une quelconque des revendications précédentes, **caractérisé en ce que** le composant de structure comprend un troisième composant (12), la pièce de liaison (1, 2, 3, 4) étant réalisée sous forme cylindrique ou sous forme de goupille et étant soudée à une extrémité au deuxième composant (11) et à l'extrémité opposée au troisième composant (12), en particulier aux deux extrémités à une tôle métallique.

11. Composant de structure selon au moins l'une quelconque des revendications 1 à 9,
**caractérisé en ce que** la première pièce de liaison (1, 2, 3, 4) est réalisée sous forme de goupille à tête et à l'extrémité à laquelle la pièce de liaison (1, 2, 3, 4) ne présente pas de tête, est soudée au deuxième composant (11), en particulier à une tôle métallique.

12. Composant de structure selon au moins l'une quelconque des revendications précédentes, **caractérisé en ce qu'**en plus du premier composant (10), un ou plusieurs composants supplémentaires, en particulier des plaques ou des pièces moulées supplémentaires, sont disposées sur la pièce de liaison (1, 2, 3, 4), de telle sorte que la pièce de liaison (1, 2, 3, 4) traverse le premier composant (10) et les composants supplémentaires au moins sur toute l'épaisseur de ceux-ci et soit soudée au deuxième composant (11).

13. Procédé de fabrication d'un composant de structure selon au moins l'une quelconque des revendications 1 à 12,
**caractérisé en ce que** la pièce de liaison (1, 2, 3, 4) est incorporée dans le premier composant (10) lors du processus de fabrication du premier composant (10) puis la pièce de liaison (1, 2, 3, 4) est soudée au niveau de son extrémité tournée vers le deuxième composant (11) au deuxième composant (11) ou à une pièce de liaison en métal supplémentaire traversant le deuxième composant (11).

14. Procédé selon la revendication 13,
**caractérisé en ce que** plusieurs pièces de liaison (1, 2, 3, 4) dans le premier composant (10) sont incorporées dans celui-ci lors du processus de fabrication du premier composant, puis le deuxième composant (11) est positionné par rapport au premier composant (10) et puis les pièces de liaison (1, 2, 3, 4) sont soudées au deuxième composant (11) et/ou à des pièces de liaison supplémentaires en métal traversant le deuxième composant (11).

15. Procédé selon la revendication 13 ou 14,
**caractérisé en ce que** le soudage est réalisé par soudage par points, soudage par rechargement, soudage par friction ou par un soudage avec une feuille réactive.
